Europäisches Patentamt

European Patent Office

Office européen des brevets

(11) Numéro de publication: **0 241 972**
**A2**

(12) # DEMANDE DE BREVET EUROPEEN

(21) Numéro de dépôt: **87200572.3**

(51) Int. Cl.⁴: **A23L 1/18**

(22) Date de dépôt: **26.03.87**

(30) Priorité: **18.04.86 BE 216560**

(43) Date de publication de la demande:
**21.10.87 Bulletin 87/43**

(84) Etats contractants désignés:
**AT BE CH DE ES FR GB GR IT LI LU NL SE**

(71) Demandeur: **Gevaert, Omer**
**Moutstraat 29**
**B-9504 Zarlardinge(BE)**

(72) Inventeur: **Gevaert, Omer**
**Moutstraat 29**
**B-9504 Zarlardinge(BE)**

(74) Mandataire: **Claeys, Pierre et al**
**Bureau Gevers 7, rue de Livourne Bte I**
**B-1050 Bruxelles(BE)**

(54) **Procédé et dispositif de préparation de produits alimentaires à base de céréales cuites et expansées.**

(57) Procédé pour la préparation de galettes de céréales cuites, comprenant l'introduction des céréales entre une matrice (1) et un poinçon (2), un rapprochement relatif entre la matrice et le poinçon par engagement avec des moyens d'entraînement (7, 8, 9, 11, 12, 14), la cuisson des céréales sous la pression exercée par ledit rapprochement, le désengagement d'un moyen d'entraînement (11, 12, 14) et son retour libre vers sa position initiale, et l'arrêt du moyen d'entraînement désengagé dans son mouvement de retour libre, dans une position prédéterminée pour assurer l'arrêt temporaire susdit de l'écartement relatif brusque entre la matrice et le poinçon dans la position d'expansion.

Fig.4.

## "Procédé et dispositif de préparation de produits alimentaires à base de céréales cuites et expansées"

La présente invention est relative à un procédé pour la préparation de produits alimentaires à base de céréales cuites sous pression dans un moule chauffé et ensuite expansées, comprenant l'introduction des céréales à cuire entre une matrice creuse et un poinçon qui forment le moule, un rapprochement relatif entre la matrice et le poinçon par engagement avec au moins l'un d'entre eux de moyens d'entraînement jusque dans une position dans laquelle le poinçon est enfoncé dans la cavité de la matrice qu'il ferme, un blocage de la matrice et du poinçon dans leur position mutuellement rapprochée, la cuisson des céréales sous la pression exercée par ledit rapprochement mutuel et à la température du moule, le désengagement d'un moyen d'entraînement et son retour libre vers sa position initiale, un déblocage de la matrice et/ou du poinçon, un écartement relatif brusque entre la matrice et le poinçon sous l'action de la force d'expansion des céréales cuites, un arrêt temporaire de ce mouvement d'écartement relatif brusque dans une position d'expansion dans laquelle la cavité de la matrice n'est pas encore ouverte, un écartement relatif complémentaire entre la matrice et le poinçon et une évacuation du produit cuit, expansé.

L'invention concerne également un dispositif de préparation de produits alimentaires à base de céréales cuites sous pression et ensuite expansées, comprenant un moule chauffé constitué d'une matrice creuse et d'un poinçon, des moyens d'introduction des céréales à cuire entre le poinçon et la matrice, des moyens d'entraînement de la matrice et/ou du poinçon capables de rapprocher mutuellement ceux-ci jusque dans une position dans laquelle le poinçon est enfoncé dans la cavité de la matrice qu'il ferme, des moyens de blocage de la matrice et du poinçon dans leur position mutuellement rapprochée, dans laquelle a lieu la cuisson des céréales sous la pression exercée et à la température du moule, un moyen d'entraînement étant agencé de manière à être désengagé vis-à-vis du poinçon et/ou de la matrice dans la position de blocage de ceux-ci, afin de pouvoir effectuer un retour libre vers sa position initiale, des moyens de déblocage de la matrice et/ou du poinçon, qui permettent un écartement relatif brusque entre la matrice et le poinçon sous l'action de la force d'expansion des céréales cuites, des moyens d'arrêt temporaire de ce mouvement d'écartement relatif brusque dans une position d'expansion dans laquelle la cavité de la matrice n'est pas encore ouverte, des moyens permettant un écartement mutuel complémentaire entre la matrice et le poinçon, dans une position dans laquelle la cavité de la matrice est ouverte, et des moyens d'évacuation du produit cuit, expansé.

On connaît déjà depuis un certain temps des dispositifs de préparation de galettes de céréales cuites et expansées (voir brevets belges n° 799.316, 868.361, 886.895, 893.770 et 902.360 ainsi que le brevet aux Etats-Unis d'Amérique n° 4.328.741).

Le dispositif selon le brevet belge n° 799.316 comprend une came pour l'entraînement du poinçon dans son mouvement de va-et-vient. Ce dispositif présente l'inconvénient que la came et le galet suiveur de came sont soumis à des chocs répétés à chaque phase d'expansion avec pour conséquence une usure rapide des pièces et un grand danger de casse. De plus, dans ce dispositif, l'uniformité des galettes produites n'est pas assurée, car dans une certaine mesure la machine subit, au cours de la phase d'expansion, la loi du produit et doit être réglée en conséquence, par exemple selon la teneur en eau contenue dans les céréales à cuire.

Afin de résoudre ces problèmes, on a mis au point des dispositifs comprenant au moins un vérin d'entraînement du poinçon ou de la matrice ou des deux à la fois et une butée fixe ou mobile, capable d'arrêter le poinçon ou la matrice à la fin de l'expansion dans une position dans laquelle la cavité de la matrice n'est pas encore ouverte.

Selon le dispositif du brevet belge n° 868.361, la tige du vérin d'entraînement reste en permanence reliée de manière articulée au poinçon, à la matrice ou à un bras de transmission relié à l'un de ceux-ci. Ce dispositif, permettant la production de produits de haute qualité, est de préférence mis en oeuvre à l'aide de vérins pneumatiques. Ceux-ci offrent l'avantage de permettre un retrait très rapide de la tige de piston du vérin pour assurer une phase d'expansion parfaite des céréales. Les vérins pneumatiques présentent toutefois l'inconvénient d'une grande consommation d'énergie pour les alimenter en air sous pression.

On a cherché par conséquent à appliquer des vérins hydrauliques. Mais les vérins hydrauliques présentent l'inconvénient d'être peu rapides dans leur déplacement à la suite de la viscosité du milieu. Ils sont donc peu adaptés pour la phase d'expansion brutale des céréales cuites sous pression. Aussi la plupart des solutions proposées font intervenir des systèmes mixtes oléo-pneumatiques et tous les dispositifs prévus sont d'une construction extrêmement complexe et nécessitent une mise au point difficile, en particulier pour régler la succession de la mise en service des divers organes d'entraînement. De plus, dans beaucoup de cas, on a besoin de pièces aux tolérances très réduites.

Dans le brevet belge n° 886.895, on a décrit un dispositif tel que celui décrit au début (voir figure 2), dans lequel sont mis en oeuvre pour déplacer le poinçon et la matrice pas moins de 3 vérins, qui peuvent être hydrauliques, deux solénoïdes et un frein à tambour. Là, un des vérins d'entraînement du poinçon peut être ramené en position initiale, pendant la cuisson des céréales entre le poinçon et la matrice bloqués dans leur position rapprochée par les solénoïdes et le frein à tambour. Pour l'expansion, le frein à tambour est relâché et le poinçon peut tomber sur une butée fixe prévue à cet effet, sans être freiné dans son trajet par le vérin qui coopérait auparavant avec lui. En fait, étant donné la complexité même de son appareillage, ce dispositif semble très difficile à mettre en oeuvre et à entretenir.

La présente invention a pour but de résoudre les problèmes posés et donc de mettre au point un procédé et un dispositif qui permettent d'obtenir des produits de haute qualité pour une consommation d'énergie fortement réduite, et cela à l'aide d'un appareillage robuste, fiable, facile à entretenir et de fonctionnement simple.

On a résolu ces problèmes, suivant l'invention, par un procédé tel que décrit au début, qui comprend un arrêt du moyen d'entraînement désengagé dans son mouvement de retour libre, dans une position prédéterminée pour assurer l'arrêt temporaire susdit de l'écartement relatif brusque entre la matrice et le poinçon dans la position d'expansion précitée. Ce procédé offre l'avantage d'une grande simplificiation, puisque la tige du vérin d'entraînement sert simultanément de butée pour l'expansion, tout en permettant un vitesse d'expansion libre des céréales, sans influence sur cette phase de la part du vérin agissant sur la partie du moule déplacée au cours de l'expansion. De plus, il permet, si on le souhaite, la mise en oeuvre d'un vérin hydraulique, puisque la tige de piston de celui-ci peut effectuer un retour à vitesse réduite pendant la phase de cuisson des céréales.

Suivant un mode de réalisation suivant l'invention, le procédé comprend l'arrêt du moyen d'entraînement désengagé dans une position prédéterminée située entre ses deux fins de course et, après l'expansion, le retour du moyen d'entraînement jusqu'à sa position initiale, ce déplacement permettant l'écartement relatif complémentaire précité.

Suivant un mode de réalisation perfectionné de l'invention, le procédé comprend le déblocage de la matrice et/ou du poinçon sous l'action du moyen d'entraînement désengagé susdit, au cours de son mouvement de retour vers sa position initiale.

Suivant un mode de réalisation avantageux de l'invention, le procédé comprend, simultanément au déblocage sudit, une accélération initiale du mouvement d'écartement relatif brusque entre la matrice et le poinçon.

On a également prévu, suivant l'invention, un dispositif, tel que décrit au début, dans lequel le moyen d'entraînement désengagé susdit présente, au cours de son mouvement de retour, une position d'arrêt prédéterminée dans laquelle il sert de moyen d'arrêt temporaire du mouvement d'écartement relatif brusque entre la matrice et le poinçon.

Suivant une forme de réalisation de l'invention, la position d'arrêt prédéterminée du moyen d'entraînement désengagé est située entre ses deux fins de course et, lors de son retour ultérieur entre la position d'arrêt prédéterminée et sa position initiale, le moyen d'entraînement désengagé forme en outre les moyens susdits permettant un écartement mutuel complémentaire entre la matrice et le poinçon.

Suivant une forme de réalisation avantageuse de l'invention, le moyen d'entraînement désengagé susdit sert, au course de son mouvement de retour libre, de moyen de déblocage de la matrice ou du poinçon.

Suivant une forme de réalisation perfectionnée de l'invention, le moyen d'entraînement désengagé susdit est la tige de piston d'un vérin hydraulique.

D'autres détails et particularités de l'invention ressortiront de la description donnée ci-après à titre non limitatif et avec référence aux dessins annexés.

La figure 1 représente une vue latérale, partiellement brisée, d'une forme de réalisation de dispositif suivant l'invention.

La figure 2 représente une vue de détail du moyen d'entraînement du dispositif représenté sur la figure 1.

La figure 3 représente une vue partiellement brisée de la figure 2, suivant la flèche F.

La figure 4 représente une vue schématique des différentes étapes du procédé mis en oeuvre à l'aide du dispositif suivant les figures 1 à 3.

Les figures 5 et 6 représentent une vue - schématique des différentes étapes du procédé mis en oeuvre à l'aide de variantes de réalisation de dispositif suivant l'invention.

Sur les dessins, les éléments identiques ou analogues sont désignés par les mêmes références.

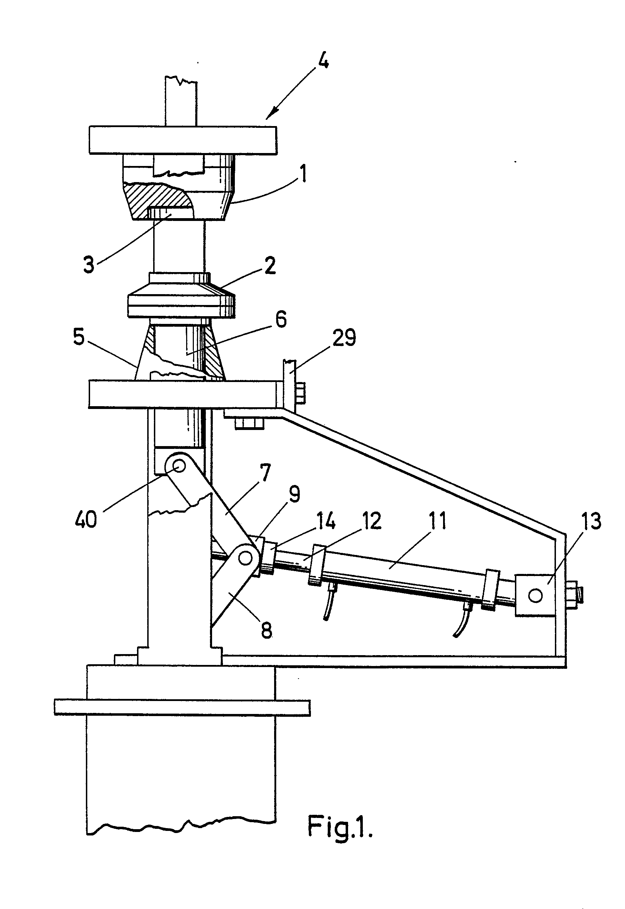

Le dispositif suivant l'invention, tel qu'illustré sur les figures 1 à 3, comprend un moule chauffé constitué d'une matrice creuse 1 et d'un poinçon 2, et des moyens d'entraînement du poinçon, qui vont être décrits de manière plus détaillée dans la suite, et qui sont capables de rapprocher le poinçon 2 de la matrice 1 dans une position dans laquelle le poinçon 2 est enfoncé dans la cavité 3 de la matrice 1 qu'il ferme. Dans l'exemple de réalisation illustré, la matrice est montée fixe sur un châssis de support schématisé 4. La tige 6 du poinçon 2 est montée également sur ce châssis 4 de manière à pouvoir coulisser suivant un mouvement alternatif en direction verticale et pour cela elle est guidée dans une douille de guidage 5 fixée sur le châssis 4.

L'extrémité inférieure de la tige 6 du poinçon 2 est reliée par l'intermédiaire d'un axe de pivotement 40 à un organe de transmission formé de deux bielles mutuellement articulées 7 et 8. Chaque bielle, dans le cas illustré, est formée d'une double bielle. L'extrémité supérieure de la double bielle 7 est donc reliée à la tige 6 du poinçon 2 tandis que son extrémité inférieure est reliée de manière articulée à la double bielle inférieure 8 dont les deux éléments sont disposés de part et d'autre de ceux de la double bielle 7. L'autre extrémité de la double bielle 8 est articulée d'une manière non représentée à la base du châssis 4.

Dans l'exemple de réalisation illustré sur les figures 1 à 3, les doubles bielles 7 et 8 sont articulées l'une sur l'autre par l'intermédiaire d'un bloc de support 9 pourvu de deux tourillons 10 alignés et disposés parallèlement à l'axe 40 de part et d'autre du bloc de support 9.

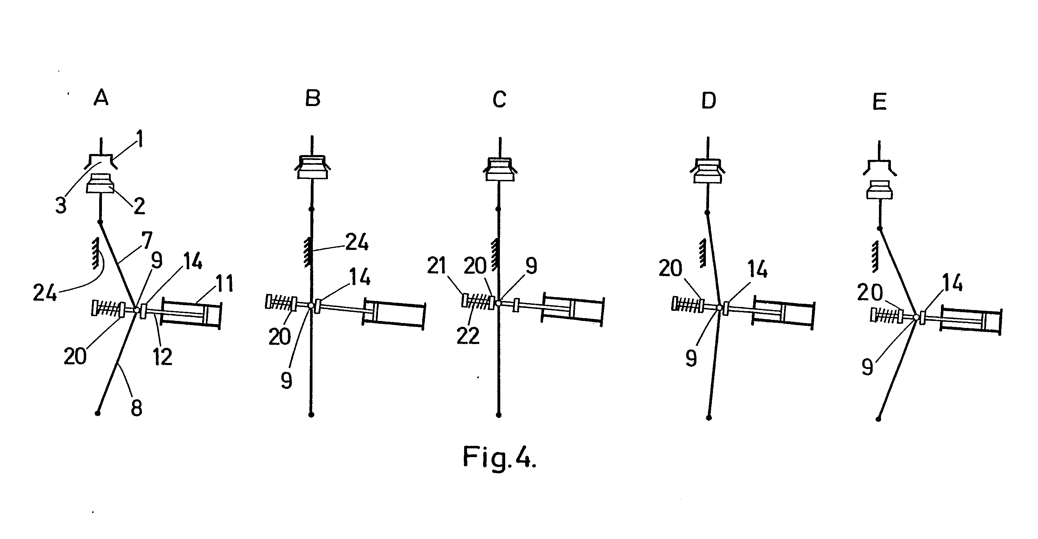

Dans la position d'ouverture complète du moule, les deux bielles 7 et 8 forment entre elles un angle ouvert dans un premier sens, vers la gauche sur la figure 1. Dans la position de fermeture complète du moule, les bielles sont dans une position quasiment alignée verticalement. Elles sont retenues dans cette position par une butée non représentée sur la figure 1 (voir butée 24 sur la représentation schématique de la figure 4) qui est située très légèrement au-delà de la position d'alignement parfait des bielles. Celles-ci, lorsqu'elles sont en appui sur la butée, forment donc entre elles un très faible angle ouvert dans le sens opposé au sens précité, c'est-à-dire vers la droite sur la figure 1. Les bielles sont ainsi bloquées entre la butée 24 et la position d'alignement parfait des bielles.

Le dispositif illustré sur les figures 1 à 3 comprend, à titre de moyens d'entraînement du poinçon, un vérin unique 11, dans ce cas un vérin hydraulique, qui est fixé sur le châssis de manière articulée, à l'aide d'un palier 13. La tige de piston 12 de ce vérin 11 présente un élément d'appui, formé dans le cas illustré d'une rondelle métallique 14 enfilée sur la tige 12 et appliquée contre un écrou 15 vissé une partie filetée 16 de la tige 12. Une rondelle en matière flexible 17, par exemple en caoutchouc synthétique ou naturel, peut être éventuellement insérée entre la rondelle métallique et l'écrou 15, à titre d'élément amortisseur.

Le bloc de support 9 présente dans l'exemple de réalisation illustré sur les figures 1 à 3 une forme de cube qu'un alésage 18 traverse de part en part entre deux de ses faces opposées, non pourvues desdits tourillons 10. La tige de piston est passée à travers l'alésage 18 dans lequel elle est capable de coulisser longitudinalement. Le bloc de support 9 peut ainsi servir de moyen de guidage pour la tige de piston 12 par rapport à l'organe de transmission formé par les deux bielles 7 et 8 mutuellement articulées.

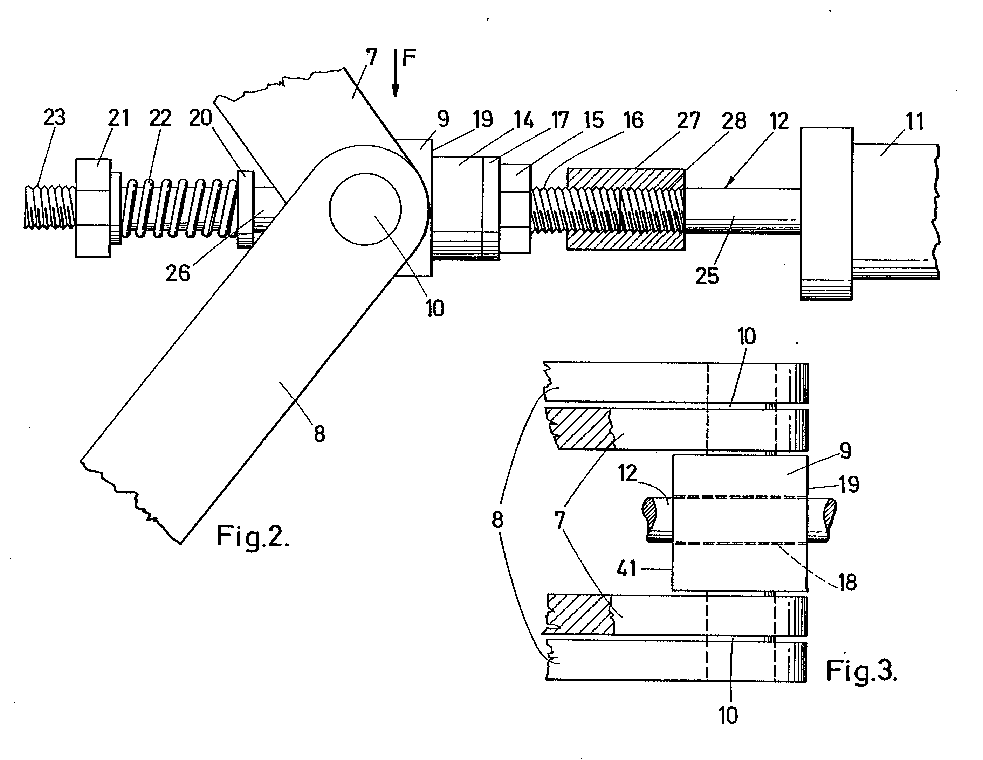

A l'aide de l'écrou 15, la position de la rondelle métallique 14 est ajustée de façon qu'en position d'ouverture complète du moule, sa face frontale orientée à l'opposé de l'écrou soit en appui contre une des faces frontales du bloc de support 9, qui présente l'alésage 18, dans le cas illustré la face 19. La rondelle 14 forme ainsi un élément d'appui capable d'exercer une poussée sur le bloc de support 9, servant d'élément de transmission, uniquement dans un sens de déplacement de la tige de piston 12, dans le cas illustré dans le sens allant de la droite vers la gauche sur les figures 1 et 2. Le bloc de support transmet cette poussée au poinçon 2 par l'intermédiaire de l'organe de transmission à bielles articulées 7, 8 et de la tige 6 du poinçon. Lorsque, comme cela va être expliqué ensuite, l'organe de transmission à bielles articulées 7, 8 est bloqué dans la position de fermeture complète du moule et que la tige de piston 12 est déplacée dans le sens du retour, c'est-à-dire de gauche à droite sur les figures 1 et 2, il y a décollement entre la rondelle 14 et la face 19 du bloc de support 9. Toutefois, l'élément d'appui 14 reste, grâce aux moyens de guidage, dans la trajectoire de retour vers sa position initiale du bloc de support.

Dans l'exemple de réalisation illustré sur la figure 2, la tige de piston 12 du vérin 11 présente aussi un deuxième élément d'appui, situé en face du bloc de support 9 du côté opposé à la rondelle 14. Ce deuxième élément d'appui est constitué d'une deuxième rondelle métallique 20 enfilée sur la tige 12 et appliquée contre un écrou 21 par l'intermédiaire d'un ressort hélicoïdal 22. L'écrou 21 est fixé sur un tronçon 23 fileté de l'extrémité de la tige de piston 12. Ce deuxième élément d'appui est donc agencé pour exercer une poussée sur la face 24 du bloc de support 19, uniquement dans le sens de déplacement de la tige de piston 12 de la gauche vers la droite sur la figure 2.

Grâce aux filetages 16 et 23 de la tige 12, il est possible d'ajuster la position des écrous 15 et 21 et donc la distance qui sépare la rondelle 20 de la rondelle 14. Celle-ci est ajustée de manière qu'elle corresponde au déplacement exact des tourillons 10 qui est nécessaire pour permettre le passage du poinçon de la position de fermeture complète du moule, dans laquelle s'effectue la cuisson sous pression des céréales, à la position d'expansion, dans laquelle le moule n'est pas encore ouvert mais dans laquelle une expansion des céréales cuites est permise.

Dans l'exemple de réalisation illustré sur la figure 2, la tige de piston 12 comprend deux tronçons 25 et 26 mutuellement reliés par un manchon de serrage 27, détachable, qui est vissé sur l'extrémité filetée 28 du tronçon 25 situé le plus à l'intérieur. Le tronçon 26 peut être vissé dans l'alésage taraudé du manchon par son extrémité filetée 16. Cet agencement permet un détachement aisé du tronçon 26 supportant les éléments d'appui 20 et 14 dans le cas où un ajustement de ceux-ci ou un remplacement de pièces s'avère nécessaire.

Sur une partie 29, brisée, du châssis 4 du dispositif sont supportés des moyens d'introduction des céréales à cuire sur le poinçon 2 et des moyens d'évacuation des galettes de céréales cuites et expansées. Ces moyens sont largement connus dans la technique antérieure et ne sont donc pas décrits de manière plus détaillée.

Le fonctionnement de ce dispositif va à présent être expliqué à l'aide de la figure 4, qui représente de manière schématique le dispositif illustré sur les figures 1 à 3.

En position A, le dispositif est dans la position représentée sur la figure 1, c'est-à-dire en position d'ouverture complète, du moule. Le poinçon 2 est en position basse et permet l'introduction de céréales à cuire sur sa face supérieure. Les bielles 7 et 8 forment entre elles un angle net, qui est ouvert vers la gauche sur la figure 4. La tige de piston 12 du vérin 11 est rentrée au maximum à l'intérieur du cylindre du vérin, et l'articulation des bielles 7 et 8, formée par le bloc de support 9, est en appui contre un des deux éléments d'appui de la tige 12, en l'occurence la rondelle 14.

Après l'introduction des céréales à cuire, un rapprochement relatif entre la matrice 1 et le poinçon 2 est obtenu par déplacement de la tige de piston 12 vers la gauche sur la figure 4 et poussée de l'élément d'appui 14 sur le bloc de support 9. Ce rapprochement a lieu jusque dans la position B, où le poinçon 2 est enfoncé dans la cavité 3 de la matrice 1 qu'il ferme. Au cours de ce rapprochement, les bielles 7 et 8 passent tout d'abord dans un état d'alignement vertical complet, puis très légèrement au-delà de cette position elles sont arrêtées par la butée 24, en formant alors un angle ouvert vers la droite sur la figure 4. Le fait que les bielles 7 et 8 sont quasiment dans une position alignée lorsqu'elles sont en appui sur la butée 24, explique pourquoi il n'a pas été possible de faire ressortir cet angle ouvert vers la droite sur les dessins. Dans cette position toutefois, les bielles sont bloquées contre la butée 24 par la pression exercée dans le moule au cours de la cuisson des céréales qui se produit alors.

A ce moment le sens de déplacement de la tige de piston 12 du vérin hydraulique 11 est inversé, c'est-à-dire qu'il y a déplacement de celle-ci vers la droite sur la figure 4.

L'élément d'appui 14, qui est agencé de manière à ne pouvoir exercer une poussée sur le bloc de support 9 que lors d'un déplacement vers la gauche sur la figure 4 de la tige de piston 2, se décolle par conséquent du bloc de support, la tige de piston 2 coulissant librement à travers ce dernier qui est retenu en place par le blocage des bielles 7 et 8. Ceci permet un retour à vitesse normale de la tige de piston 12 du vérin hydraulique vers sa position initiale.

A un moment donné, au cours de ce coulissement libre de la tige de piston 12 vers sa position initiale, le deuxième élément d'appui de celle-ci, c'est-à-dire la rondelle 20, entre en contact avec le bloc de support 9 comme illustré en position C. La très légère poussée obtenue alors vers la droite sur la figure 4 permet aux bielles 7 et 8 de repasser au-delà de la position d'alignement parfait précitée. En fait, selon la forme de réalisation illustrée, le ressort 22 est tout d'abord légèrement comprimé entre l'écrou 21 et la rondelle 20 et ce n'est que lorsque la force de rappel du ressort 22 devient suffisamment élevée pour permettre le déblocage des bielles 7 et 8, que celles-ci sont poussées au-delà de leur position d'alignement parfait précitée. Au-delà de cette position, sous l'action de la détente du ressort que les lance de façon accélérée vers la droite sur la figure 4 ainsi que de la pression exercée à l'intérieur du moule par les céréales cuites sous pression, les bielles reforment entre elles un angle ouvert vers la gauche, en permettant un écartement relatif brusque entre le poinçon et la matrice et ainsi une expansion des céréales cuites sous pression. Toutefois, au même moment, le déplacement vers la droite sur la figure 4 de la tige de piston 12 est arrêté par une commande du vérin 11. L'écartement entre les deux éléments d'appui 20 et 14 a été ajusté pour que le coulissement du bloc de support 9 de l'élément d'appui 20 é l'élément d'appui 14 sur la tige de piston 12 permette un écartement relatif entre le poinçon 2 et la matrice 1 dans une position dite d'expansion, dans laquelle la cavité de la matrice n'est pas encore ouverte. Donc l'élément d'appui 14 arrêté assure à son tour un arrêt temporaire dans la position d'expansion du poinçon 2, ainsi qu'il ressort de la position D. En fait, dans l'exemple de réalisation illustré sur la figure 4, l'ajustement précité doit tenir compte de la compression attendue du ressort 22.

Enfin, après cet arrêt temporaire du poinçon dans la position d'expansion le vérin est commandé de manière à permettre une poursuite du déplacement de la tige de piston vers la droite sur la figure 4, jusqu'à sa position initiale. Le poinçon poursuit son mouvement vers le bas par inertie et gravité et revient aussi dans sa position initiale E, dans laquelle la galette de céréales cuites et expansées peut être évacuée du dispositif, d'une manière connue en soi.

Comme on peut le voir, le dispositif qui vient d'être décrit offre le grand avantage d'une extrême simplicité dans l'appareillage : un seul vérin est nécessaire pour effectuer et commander toutes les étapes du procédé de fabrication de céréales cuites sous pression et expansées, et ce vérin peut être un vérin hydraulique. On peut envisager par exemple la mise en oeuvre suivant l'invention d'un vérin hydraulique de 25mm de diamètre qui développe une pression de 25 bars pour une puissance de 147,1 W (0,2 chevaux-vapeur), alors que, dans la pratique, pour effectuer la préparation de galettes à l'aide d'un dispositif du genre de celui décrit à la figure 1 du brevet belge n° 868.361, on met en oeuvre un vérin pneumatique principal d'un diamètre de 100mm qui développe une pression de 5 bars pour une puissance de 1.471 W (2,0 chevaux-vapeur), ainsi qu'un vérin pneumatique secondaire destiné à déplacer une butée mobile.

On peut donc aisément réaliser une grande économie d'énergie par la possibilité que garantit l'invention de mettre en oeuvre un unique vérin hydraulique pour la fabrication des galettes de céréales cuites sous pression et expansées. Le coût de fabrication des pièces, qui ne demandent pas d'usinage extrêmement précis, le coût de l'appareillage, simple, et le coût de la consommation en énergie sont donc tous diminués, pour un encombrement plus faible de l'installation.

En plus de ces avantages, on obtient une diminution très importante du bruit de l'expansion, car la détente d'un vérin pneumatique n'est plus nécessaire.

Enfin, le mouvement d'expansion est lancé de manière accélérée au départ et ne dépend donc pas uniquement des conditions existant à l'intérieur du moule, ce qui garantit une parfaite uniformité de l'expansion.

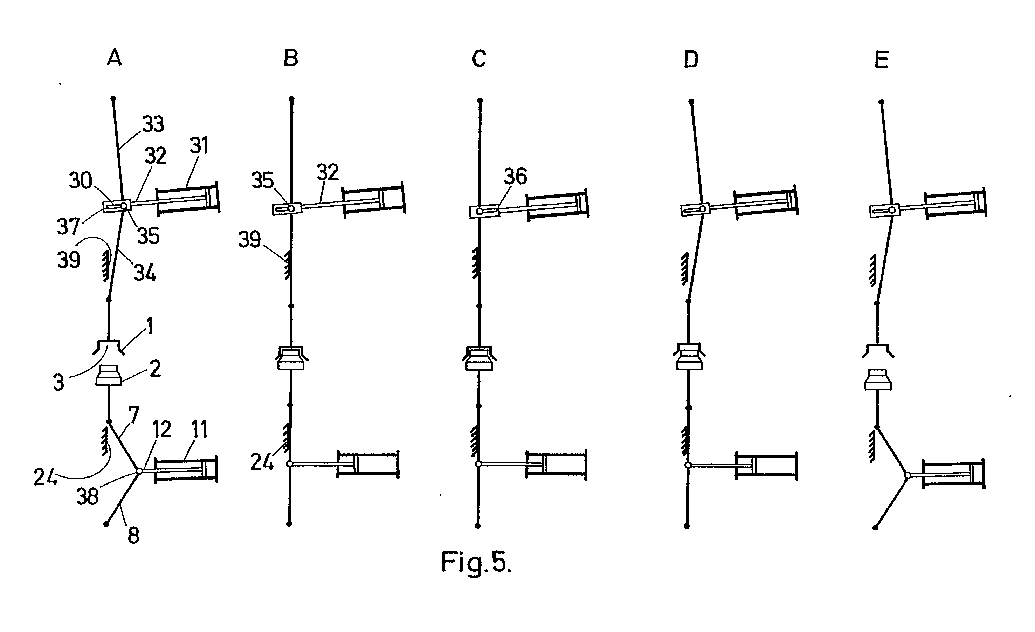

La figure 5 illustre une variante de réalisation du dispositif suivant l'invention, qui montre qu'il est bien sûr possible suivant l'invention de décomposer le déplacement mutuel entre la matrice et le poinçon entre ces deux éléments à la fois. Une autre différence réside dans le fait que le moyen de guidage consiste en une ouverture allongée 30, de type boutonnière, à l'extrémité de la tige de piston 32 du vérin 31 qui entraîne un organe à 2 bielles articulées 32, 34 destiné à déplacer en va-et-vient la matrice 1. Ces deux bielles sont mutuellement articulées sur un tourillon 35 capable de coulisser dans la boutonnière 30.

Le piston 2 est lui aussi déplacé par un vérin 11, dont la tige de piston 12 est raccordée à l'articulation mutuelle 38 des bielles 7 et 8 de façon à pouvoir pivoter par rapport à cette dernière.

Pour passer de la position d'ouverture complète A à la position de fermeture complète B les tiges des deux vérins sont déplacées vers la gauche sur la figure 5 de façon à bloquer les bielles 33 et 34 et respectivement 7 et 8 entre leur butée respective 39 et 24 et leur position d'alignement parfait. Pendant son déplacement vers la gauche sur la figure 5, la tige 32 est en appui sur le tourillon 35 par l'extrémité droite 36 de la boutonnière 30.

Après que le dispositif est parvenu dans la position B, la tige de piston 32 entame son mouvement de retour vers la droite sur la figure 5 et le tourillon 35 bloqué coulisse dans la boutonnière jusqu'à ce que, à la fin de la phase de cuisson, elle atteigne la position représentée en C où son extrémité gauche 37 vient en appui contre le tourillon 35.

Une légère poussée vers la gauche de la boutonnière 30 sur les bielles 33 et 34 leur permet de passer au-delà de leur position d'alignement pafait et de garantir un écartement brusque entre la matrice et le poinçon. La longueur de la boutonnière est mesurée de façon à correspondre exactement au déplacement nécessaire du tourillon 35 pour permettre le passage de la matrice de la position de fermeture complète à celle d'expansion illustrée sur le figure D. Comme ont peut le voir, un élément lanceur élastique, tel que le ressort 22, n'est pas mise en oeuvre dans ce cas.

Comme on peut le voir sur la figure 5, au moment où l'extrémité 37 de la boutonnière a débloqué les bielles 33 et 34, la tige de piston 32 est revenue à sa position initiale et elle arrête donc dans cette position le tourillon 35 chassé vers la droite de la figure 5 sous la force d'expansion des céréales cuites sous pression, ainsi qu'il ressort de la position D.

La tige de piston 12 du vérin 11 est alors seulement déplacée vers sa position initiale pour ouvrir le moule.

Il doit être entendu que la présente invention n'est en aucune façon limitée aux formes de réalisation décrites ci-dessus et que bien des modifications peuvent y être apportées sans sortir du cadre du présent brevet.

On peut par exemple prévoir que, dans un exemple de réalisation tel que celui illustré sur les figures 1 à 4, la tige de piston ne présente pas de second élément d'appui, donc de rondelle 20, de ressort 22 et d'écrou 21. Au lieu de cela on peut prévoir un petit vérin ou un autre organe d'actionnement analogue de faible puissance, capable de pousser vers la droite sur la figure 4 l'organe de transmission du poinçon et de le débloquer à la fin de la cuisson, éventuellement en le lançant. Ce vérin pourrait d'ailleurs remplacer simultanément la butée 24.

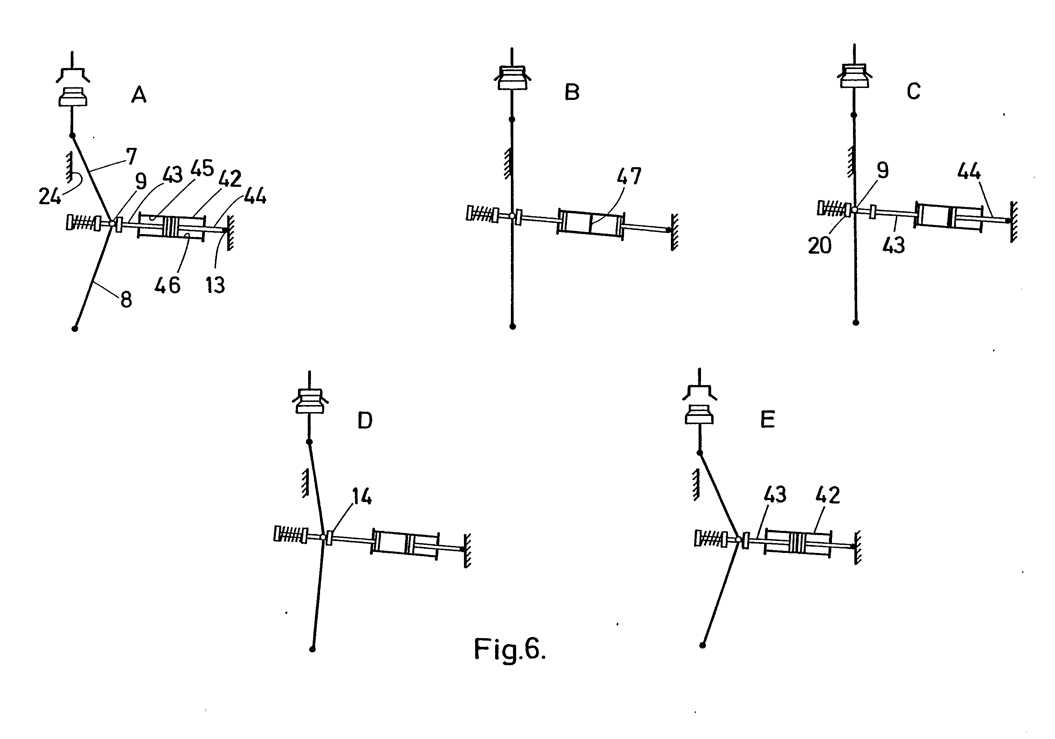

Sur la figure 6, on peut voir par exemple une variante de réalisation du dispositif, dans laquelle, comme illustré sur la figure 5, le déplacement mutuel entre la matrice et le poinçon est commandé au moyen de deux moyens d'entraînement, mais ces derniers agissent tous deux sur le poinçon ou sur la matrice. Dans le cas illustré, les moyens d'entraînement sont les deux tiges de piston 43 et 44 d'un vérin à double effet 42, qui comprend deux chambres 45 et 46 séparées par une paroi séparatrice 46. La tige de piston 43 est agencée sur le bloc de support 9 comme la tige de piston 12 de la forme de réalisation illustrée sur la figure 4. La tige de piston 44 est fixée de façon articulée sur le châssis, par exemple au moyen d'un palier 13. Tous les autres éléments sont semblables à la forme de réalisation illustrée sur la figure 4.

Pour le déplacement de la position complètement ouverte A à la position complètement fermée B, les deux tiges 43 et 44 font saillie hors de leurs chambres respectives, la tige 43 vers la gauche et la tige 44 vers la droite, en vue de bloquer les bielles 7 et 8 entre la butée 24 et leur position d'alignement précis.

Après que le dispositif a atteint la position B, l'une quelconque des tiges de piston 43 et 44, dans ce cas la tige 44, entame le mouvement de retour, vers la droite sur la figure 6, tandis que l'autre tige, dans ce cas la tige 43, reste en position d'extension. Conformément à cela la tige de piston 43 coulisse dans le bloc de support 9 vers la droite et la rondelle 20 entre en prise avec ce dernier, comme montré en position C. La légère poussée vers la droite laisse alors les bielles 7 et 8 revenir au-delà de la position dite d'alignement précis. Ce mouvement est ensuite stoppé par la rondelle 14 dans la position d'expansion D. Finalement, après cet arrêt, la tige de piston 43 est retournée vers la droite dans le vérin 42 et le poinçon retourne jusqu'à sa position initiale.

## Revendications

1. Procédé pour la préparation de produits alimentaires à base de céréales cuites sous pression dans un moule chauffé et ensuite expansées, comprenant l'introduction des céréales à cuire entre une matrice creuse (1) et un poinçon (2) qui forment le moule (A), un rapprochement relatif entre la matrice (1) et le poinçon (2) par engagement avec au moins l'un d'entre eux de moyens d'entraînement jusque dans une position (B) dans laquelle le poinçon (2) est enfoncé dans la cavité de la matrice (1) qu'il ferme, un blocage de la matrice (1) et du poinçon (2) dans leur position mutuellement rapprochée, la cuisson des céréales sous la pression exercée par ledit rapprochement mutuel et à la température du moule, le désengagement d'un moyen d'entraînement et son retour libre vers sa position initiale, un déblocage (en C) de la matrice (1) et/ou du poinçon (2), un écartement relatif brusque entre la matrice (1) et le poinçon (2) sous l'action de la force d'expansion des céréales cuites, un arrêt temporaire de ce mouvement d'écartement relatif brusque dans une position d'expansion (D) dans laquelle la cavité de la matrice (1) n'est pas encore ouverte, un écartement relatif complémentaire entre la matrice (1) et le poinçon (2) et une évacuation du produit cuit, expansé, caractérisé en ce qu'il comprend un arrêt du moyen d'entraînement désengagé dans son mouvement de retour libre, dans une position prédéterminée (D) pour assurer l'arrêt temporaire susdit de l'écartement relatif brusque entre la matrice (1) et le poinçon (2) dans la position d'expansion précitée.

2. Procédé suivant la revendication 1, caractérisé en ce qu'il comprend l'arrêt du moyen d'entraînement désengagé dans une position prédéterminée (D) située entre ses deux fins de course (A, E et respectivement B) et, après l'expansion, le retour du moyen d'entraînement jusqu'à sa position initiale (A, E), ce déplacement permettant l'écartement relatif complémentaire précité.

3. Procédé suivant la revendication 1, caractérisé en ce qu'il comprend l'arrêt du moyen d'entraînement désengagé dans une position prédéterminée (D) correspondant à sa position initiale (A) et le retour d'un ou d'autres moyens d'entraînement vers sa ou leur position initiale (A, E) pour permettre l'écartement relatif complémentaire précité.

4. Procédé suivant l'une quelconque des revendications 1 à 3, caractérisé en ce qu'il comprend le déblocage de la matrice (1) et/ou du poinçon (2) sous l'action du moyen d'entraînement désengagé susdit, au cours de son mouvement de retour (de B vers D ou respectivement E) vers sa position initiale.

5. Procédé suivant l'une quelconque des revendications 1 à 4, caractérisé en ce qu'il comprend, simultanément au déblocage susdit, une accélération initiale du mouvement d'écartement relatif brusque entre la matrice (1) et le poinçon (2).

6. Procédé suivant la revendication 5, caractérisé en ce que cette accélération est produite sous l'action du moyen désengagé susdit, au cours de son mouvement de retour vers sa position initiale.

7. Procede suivant l'une quelconque des revendications 1 à 6, caractérisé en ce qu'il comprend un guidage réciproque entre la matrice ou le poinçon et le moyen d'entraînement désengagé, au cours du mouvement de retour libre de ce dernier.

8. Procédé suivant l'une quelconque des revendications 1 à 7, caractérisé en ce que le moyen d'entraînement désengagé susdit est déplacé sous l'action de la pression d'un milieu hydraulique.

9. Dispositif de préparation de produits alimentaires à base de céréales cuites sous pression et ensuite expansées, comprenant un moule chauffé constitué d'une matrice creuse (1) et d'un poinçon (2), des moyens d'introduction des céréales à cuire entre le poinçon (1) et la matrice (2), des moyens d'entraînement (6, 7, 8, 11, 12, 31, 32, 33, 34, 42, 43, 44) de la matrice (1) et/ou du poinçon (2) capables de rapprocher mutuellement ceux-ci jusque dans une position dans laquelle le poinçon (2) est enfoncé dans la cavité de la matrice (1) qu'il ferme, des moyens de blocage (7, 8, 24, 33, 34, 39) de la matrice (1) et du poinçon (2) dans leur position mutuellement rapprochée, dans laquelle a lieu la cuisson des céréales sous la pression exercée et à la température du moule, un moyen d'entraînement (12, 32, 43, 44) étant agencé de manière à être désengagé vis-à-vis du poinçon (2) et/ou de la matrice (1) dans la position de blocage de ceux-ci, afin de pouvoir effectuer un retour libre vers sa position initiale, des moyens de déblocage (12, 32, 43) de la matrice (1) et/ou du poinçon (2), qui permettent un écartement relatif brusque entre la matrice (1) et le poinçon (2) sous l'action de la force d'expansion des céréales cuites, des moyens d'arrêt temporaire (12, 32, 43, 44) de ce mouvement d'écartement relatif brusque dans une position d'expansion dans laquelle la cavité de la matrice (1) n'est pas encore ouverte, des moyens (12, 43) permettant un écartement mutuel complémentaire entre la matrice (1) et le poinçon (2), dans une position dans laquelle la cavité de la matrice (1) est ouverte, et des moyens d'évacuation du produit cuit, expansé, caractérisé en ce que le moyen d'entraînement désengagé (12, 32, 43, 44) susdit présente, au cours de son mouvement de retour, une position d'arrêt prédéterminée (D) dans laquelle il sert de moyen d'arrêt temporaire du mouvement d'écartement relatif brusque entre la matrice (1) et le poinçon (2).

10. Dispositif suivant la revendication 9, caractérisé en ce que la position d'arrêt prédéterminée (D) du moyen d'entraînement désengagé (12) est située entre ses deux fins de course et en ce que, lors de son retour ultérieur entre la position d'arrêt prédéterminée (D) et sa position initiale (E), le moyen d'entraînement désengagé (12) forme en outre les moyens susdits (12) permettant un écartement mutuel complémentaire entre la matrice (1) et le poinçon (2).

11. Dispositif suivant la revendication 9, caractérisé en ce que la position d'arrêt prédéterminée (D) du moyen d'entraînement désengagé (32, 44) est située dans la position initiale (A) de celui-ci et en ce qu'un ou des moyens d'entraînement autres que ce dernier forment les moyens (12, 43) permettant un écartement mutuel complémentaire entre la matrice (1) et le poinçon (2).

12. Dispositif suivant l'une quelconque des revendications 9 à 11, caractérisé en ce que le moyen d'entraînement désengagé (12, 32, 43) susdit sert, au cours de son mouvement de retour libre, de moyen de déblocage de la matrice (1) ou du poinçon (2).

13. Dispositif suivant l'une quelconque des revendications 9 à 12, caractérisé en ce qu'il comporte un élément lanceur (20, 21, 22) capable d'accélérer la matrice (1) ou le poinçon (2) dans le sens de leur écartement relatif, lors de leur déblocage.

14. Dispositif suivant la revendication 13, caractérisé en ce que le moyen d'entraînement désengagé (12) susdit comporte ledit élément lanceur (20, 21, 22).

15. Dispositif suivant l'une quelconque des revendications 9 à 14, caractérisé en ce que le moyen d'entraînement désengagé susdit est la tige de piston (12, 32, 43, 44) d'un vérin hydraulique (11, 31, 42).

16. Dispositif suivant la revendication 15, caractérisé en ce que la tige de piston (12, 32, 43) du vérin (11, 31, 42) présente un élément d'appui (14, 36) capable d'exercer une poussée sur un organe de transmission (9, 35) de la matrice (1) ou du poinçon (2), uniquement dans un des sens de deplacement de la tige de piston et en ce que le dispositif comprend des moyens de guidage réciproques (18, 30) entre ladite tige (12, 32, 43) et l'organe de transmission (9, 35) susdit qui sont agencés pour que, lors de l'expansion, l'élément d'appui (14, 36) soit arrêté, dans sa position prédéterminée (D), dans la trajectoire de l'organe de transmission (9, 35), et serve de moyen d'arrêt temporaire de celui-ci.

17. Dispositif suivant la revendication 16, caractérisé en ce que la tige de piston (12, 32, 43) du vérin (11, 31, 42) présente un second élément d'appui (20, 21, 37) capable d'exercer une poussée sur l'organe de transmission (9, 35) susdit uniquement dans l'autre sens de déplacement de la tige de piston, la distance entre les deux éléments d'appui (20, 21, 37 et 14, 36) sur la tige de piston (12, 32, 43) étant prédéterminée pour permettre exactement l'écartement relatif brusque susdit entre le poinçon (2) et la matrice (1).

18. Dispositif suivant la revendication 17, caractérisé en ce que la position mutuelle des deux éléments d'appui (20, 21 et 14) sur la tige de piston (12) est ajustable.

19. Dispositif suivant l'une quelconque des revendications 16 à 18, caractérisé en ce que l'organe de transmission susdit comprend deux bielles articulées (7, 8, 33, 34) entre elles à une de leurs extrémités, l'une d'elle (8, 34) étant articulée à la matrice (1) ou au poinçon (2) à son autre extrémité, tandis que l'autre bielle (7, 33) est articulée sur un point fixe à son autre extrémité, en ce qu'en position d'ouverture du moule ces bielles (7, 8, 33, 34) forment entre elles un angle ouvert dans un premier sens et en ce que, dans la position mutuellement rapprochée susdite, les bielles sont retenues par une butée de blocage (24, 39) dans une position d'alignement presque complet (B) où elles forment entre elles un angle ouvert dans un deuxième sens opposé au premier.

20. Dispositif suivant l'une quelconque des revendications 16 à 19, caractérisé en ce que les moyens de guidage précités consistent en une ouverture allongée (30), de type boutonnière, qui est façonnée dans la tige de piston (32), et dans laquelle est capable de coulisser une saillie coopérante (35) prévue sur l'organe de transmission, une des extrémités (36) de cette ouverture formant ledit premier élément d'appui tandis que son extrémité opposée (37) peut éventuellement former un moyen de déblocage du piston (2) ou de la matrice (1).

21. Dispositif suivant la revendication 19, caractérisé en ce que les moyens de guidage précités consistent en un bloc de support (9) à tourillons (10) par lequel les bielles (7, 8) sont mutuellement articulées, ce support présentant un alésage (18) à travers lequel la tige de piston (12, 43) peut coulisser, la tige de piston (12, 43) présentant des saillies (14, 20), éventuellement ajustables, qui sont situées sur la tige (12, 43) de part et d'autre du bloc (9) et forment lesdits éléments d'appui.

22. Dispositif suivant l'une quelconque des revendications 16 à 21, caractérisé en ce que la tige de piston (12) comprend au moins deux tronçons (25, 26), mutuellement reliés par un manchon de fixation (27) détachable, le tronçon (26) situé le plus à l'extérieur portant le ou éventuellement les éléments d'appui susdits (14, 20).

23. Dispositif suivant l'une quelconque des revendications 17 à 22, caractérisé en ce que l'élément lanceur est un ressort (22) ou élément élastique analogue comprimé entre le second élément d'appui (21) et l'organe de transmission (9) juste avant le déblocage de la matrice (1) ou du piston (2), par le déplacement de la tige de piston du vérin (12, 43, 44) vers sa position initiale.

Fig.1.

Fig.2.

Fig.3.

Fig.4.

0 241 972

Fig.5.

0 241 972

Fig.6.

0 241 972